# FASCICULE DE BREVET EUROPEEN

(11) **EP 3 350 530 B1**
(45) Date de publication et mention de la délivrance du brevet: **28.08.2019**
(21) Numéro de dépôt: 16778218.4
(22) Date de dépôt: 15.09.2016
(51) Int. Cl.: F28D 17/00, F28D 20/00

(54) **DISPOSITIF ET SYSTEME DE STOCKAGE DE CALORIES/FRIGORIES**
VORRICHTUNG UND SYSTEM ZUR SPEICHERUNG VON KALORIEN/FRIGORIEN
DEVICE AND SYSTEM FOR STORING CALORIES/FRIGORIES

(30) Priorité: 16.09.2015 FR 1558678
(43) Date de publication de la demande: 25.07.2018
(73) Titulaire: Eco-Tech Ceram, 66100 Perpignan (FR)
(72) Inventeur: MEFFRE, Antoine, 66100 Perpignan (FR)
(74) Mandataire: Delaveau, Sophie
(86) Numéro de dépôt international: PCT/EP2016/071882
(87) Numéro de publication internationale: WO 2017/046275

(56) Documents cités:
- DE-A1-102011 000 655
- DE-A1-102012 205 771
- GB-A- 2 509 894
- US-A1- 2014 074 314

## Description

La présente invention concerne un dispositif de stockage, et éventuellement de transport, de chaleur ou de froid, en vue de sa réutilisation ultérieure par transfert à un fluide. Elle concerne également un système comprenant plusieurs dispositifs de stockage selon l'invention assemblés entre-eux. L'invention concerne plus particulièrement un dispositif de stockage conforme au préambule de la revendication, tel qu'illustré par le document US 2014/0074314A1.

Le domaine de l'invention est le domaine des dispositifs de stockage et/ou de transport de calories/frigories, en vue de leur réutilisation ultérieure par transfert thermique vers un fluide cible, tel qu'un flux gazeux.

### Etat de la technique

On connait de nombreux dispositif permettant de stocker de la chaleur, pour la réutiliser ultérieurement, éventuellement après transport sur un autre site.

Ces dispositifs comprennent un matériau, à inertie thermique, prévu pour emmagasiner de la chaleur pour ensuite la restituer ultérieurement, plus ou moins vite. Ces dispositifs comprennent une ouverture d'introduction d'un fluide dans le dispositif pour réaliser un échange thermique entre le fluide et le matériau à inertie thermique, et une ouverture d'extraction pour extraire le fluide se trouvant dans ledit dispositif après ledit échange thermique.

Ainsi, lors d'une phase, dite de chargement, un fluide chaud est circulé dans le dispositif. Un échange thermique à lieu entre le fluide chaud et le matériau à inertie thermique, transférant une partie de la chaleur du fluide chaud au matériau à inertie thermique.

Lors de la restitution, un fluide froid est circulé dans le dispositif « chargé » en calories. Un échange thermique a alors lieu entre le matériau à inertie thermique, chargé de calories, et le fluide froid, transférant une partie de la chaleur du matériau à inertie thermique vers le fluide froid, qui est alors réchauffé.

Cependant, les dispositifs actuels de stockage de chaleur sont peu robustes de sorte qu'ils ne peuvent pas être transportés. Ainsi, ils offrent peu de flexibilité sur le site de réutilisation de la chaleur stockée, qui le plus souvent doit être réutilisée sur le site où elle a été produite.

De plus, les dispositifs actuels présentent de faibles capacités de stockage et de restitution de la chaleur, et sont lents lors des échanges thermiques lors des phases de chargement et de restitution.

Un but de la présente invention est de remédier à ces inconvénients.

Un autre but de l'invention est de proposer un dispositif de stockage de chaleur/froid présentant une plus grande flexibilité sur le site de réutilisation de la chaleur ou du froid stocké(e).

Il est aussi un but de l'invention de proposer un dispositif de stockage de chaleur/froid présentant une plus grande capacité de stockage.

Encore un but de l'invention est de proposer un dispositif de stockage de chaleur/froid réalisant un échange thermique plus rapide lors d'une phase de chargement et/ou d'une phase de restitution.

### Exposé de l'invention

L'invention permet d'atteindre au moins l'un de ces buts par un dispositif de stockage de chaleur/froid, en particulier transportable, en vue d'une réutilisation ultérieure par transfert vers un fluide, dit cible, ledit dispositif comprenant :
- un conteneur, en particulier rigide ;
- un ensemble de stockage, dit principal, disposé dans ledit conteneur, et prévu pour emmagasiner des calories/frigories fournies par une source externe ;
- une couche de stockage rigide, disposée entre ledit conteneur et ledit ensemble de stockage principal, et prévue pour emmagasiner des calories/frigories fournies par une source externe ;
- une couche isolante disposée entre ledit conteneur et ladite couche de stockage rigide ; et
- au moins un moyen pour faire circuler ledit fluide cible dans ledit dispositif.

Ainsi, le dispositif de stockage met en oeuvre un ensemble de stockage principal, qui peut se présenter sous différentes formes et natures, combiné avec une couche de stockage rigide. Ainsi, le dispositif selon l'invention présente une rigidité et une tenue mécanique améliorées grâce à la couche de stockage rigide. Par conséquent, il est possible de déplacer/transporté le dispositif de stockage entre plusieurs sites, ce qui offre une plus grande flexibilité d'utilisation dans l'espace.

En même temps, et sans dégrader la rigidité et la tenue mécanique du dispositif dans son ensemble, il est possible d'utiliser un ensemble de stockage principal permettant d'une part d'augmenter la capacité de stockage et d'autre part, d'accélérer le transfert thermique vers/depuis un fluide, par exemple un ensemble de stockage réalisé avec des morceaux de matériau(x) à inertie thermique, présentant ainsi une surface d'échange thermique accrue.

Dans la suite de la description, pour éviter des lourdeurs rédactionnelles, l'expression « fluide initial » désignera le fluide chaud, respectivement le fluide froid, utilisé lors de la phase de chargement thermique du dispositif pour transférer des calories, respectivement des frigories, audit dispositif lorsque ce dernier est utilisé pour le stockage de chaleur, respectivement le stockage de froid.

De plus, l'expression « fluide cible » désignera le fluide vers lequel les calories, respectivement les frigories, stockées dans ledit dispositif sont transférées lors d'une phase de restitution thermique, lorsque ledit dispositif est utilisé pour le stockage de chaleur, respectivement le stockage de froid.

Avantageusement, la couche de stockage rigide et l'ensemble de stockage principal peuvent être réalisés avec au moins un matériau à inertie thermique commun.

Alternativement, ou en plus, la couche de stockage rigide peut comprendre au moins un matériau à inertie thermique différent d'au moins un matériau à inertie thermique utilisé pour la réalisation de l'ensemble de stockage principal.

Suivant une forme de réalisation avantageuse, l'ensemble de stockage principal peut se présenter sous la forme d'un ensemble d'éléments de stockage, chaque élément se présentant sous la forme d'un morceau ou d'un granule.

Un tel ensemble permet d'augmenter la surface, et la vitesse, d'échange thermique avec un fluide initial pour emmagasiner des calories/frigories lors d'une phase de chargement, et pour transférer des calories/frigories vers un fluide cible lors d'une phase de restitution.

Chaque élément de stockage peut être réalisé en au moins un matériau de stockage à inertie thermique.

Suivant un mode de réalisation particulièrement préféré, l'ensemble de stockage principal peut comprendre, en particulier consister en, un ensemble de billes. Autrement dit, chaque élément de stockage peut se présenter sous la forme d'une bille.

Ce mode de réalisation procure un rapport transfert thermique/perte de charge optimal.

Le matériau de stockage peut, suivant un exemple de réalisation préféré, présenter une plus grande dimension, et en particulier un diamètre, compris(e) entre 10mm et 30mm, et encore plus préférentiellement compris(e) entre 15mm et 25mm, et toujours plus préférentiellement compris(e) entre 19mm et 21mm.

Ces dimensions de morceaux, et en particulier de billes, de matériau à inertie thermique permettent d'obtenir des résultats améliorés en termes de rapport (transfert thermique/perte de charge).

Suivant un exemple de réalisation avantageux, le matériau utilisé pour la réalisation de l'ensemble de stockage principal peut comprendre, ou consister en, un matériau réfractaire.

Préférentiellement, le matériau réfractaire peut être de la céramique réfractaire. Cette dernière présente une tenue/résistance mécanique, même pour des températures élevées, ce qui permet une plus grande flexibilité au niveau des températures stockées. L'utilisation de la céramique permet un stockage de chaleur à des températures élevées, bien supérieures aux températures pouvant être atteintes avec les matériaux utilisées dans les dispositifs de stockage de chaleur actuels, telle que des huiles.

La couche de stockage rigide peut avantageusement être réalisée avec des briques rigides, c'est-à-dire par assemblage de briques rigides.

Il est ainsi possible de concevoir, une couche de stockage rigide de manière flexible, et personnalisée en fonction de l'application souhaitée.

Suivant un mode de réalisation nullement limitatif, la couche de stockage rigide peut présenter une épaisseur comprise entre 60 et 220mm.

Tel que précisé plus haut, la couche de stockage rigide peut être réalisée en un matériau réfractaire, en particulier avec le même matériau que l'ensemble de stockage principal.

Suivant un exemple de réalisation permettant une plus grande flexibilité en température, le matériau utilisé pour la réalisation de la couche de stockage peut comprendre, ou consister en, une céramique réfractaire.

La couche isolante peut être réalisée avec tout type de matériau prévu pour l'isolation thermique.

En particulier, la couche isolante peut être réalisée en silicate de calcium, par exemple par un ensemble de panneaux de silicate de calcium.

La couche isolante peut présenter une épaisseur comprise entre 100mm et 300mm.

Le moyen pour faire circuler un fluide dans le dispositif peut comprendre :
- au moins une ouverture, dite d'introduction, du fluide cible dans ledit dispositif, et en particulier dans ledit ensemble de stockage principal, et
- au moins une ouverture d'extraction dudit fluide cible dudit dispositif, et en particulier dans dudit ensemble de stockage principal cible.

Au moins une même ouverture d'introduction, respectivement d'extraction, peut être utilisée lors de l'introduction, respectivement de l'extraction, d'un fluide initial lors de la phase de chargement thermique et d'un fluide cible lors de la phase de restitution thermique.

Autrement dit, le fluide initial et le fluide cible sont introduits dans ledit, respectivement extrait dudit, dispositif par une même ouverture d'introduction, respectivement d'extraction, à tour de rôle.

Le dispositif selon l'invention peut comprendre plusieurs ouvertures d'introduction et plusieurs ouvertures d'extraction, préférentiellement autant d'ouvertures d'introduction que d'ouvertures d'extraction. Ainsi, il peut être parcouru par plusieurs fluides, c'est-à-dire plusieurs fluides initiaux ou plusieurs fluides cibles, en même temps et en parallèle.

Suivant un mode de réalisation préféré, au moins un, en particulier chacun, des fluides initial et cible, peut être circulé dans ledit dispositif de sorte qu'il entre en contact avec l'ensemble de stockage, et éventuellement avec la couche de stockage rigide.

Suivant un autre mode de réalisation, le moyen pour faire circuler un fluide dans ledit dispositif peut comprendre au moins un circuit, en particulier étanche, dans lequel circule au moins un, en particulier chacun, des fluides initial et cible, de sorte que ledit fluide n'entre pas en contact avec l'ensemble de stockage, ni avec la couche de stockage rigide. Pour ce faire, un unique circuit peut être utilisé à tour de rôle pour le fluide initial et/ou pour le fluide cible. Alternativement, un circuit peut être dédié à chacun des fluides individuellement. Ce mode de réalisation est particulièrement avantageux lorsque le fluide initial et/ou le fluide cible est agressif ou dangereux.

Bien entendu, les deux modes de réalisation peuvent être combinés de sorte que :
- l'un des fluides initial et cible peut être circulé au contact de l'ensemble de stockage, et éventuellement de la couche de stockage rigide ; et
- l'autre des fluides initial et cible peut être circulé dans un circuit de sorte qu'il n'est pas au contact de l'ensemble de stockage et de la couche de stockage rigide.

Suivant un mode de réalisation préféré, la ou les ouverture(s) d'introduction, et la ou les ouverture(s) d'extraction peuvent être disposées au niveau de deux parois opposées dudit dispositif.

Ce mode de réalisation permet d'assembler plus facilement plusieurs dispositifs de stockage entre-eux.

Alternativement, ou en plus, une ouverture d'introduction et une ouverture d'extraction peuvent être disposées sur une même paroi ou sur deux parois adjacentes.

Avantageusement, le dispositif selon l'invention peut comprendre, au niveau d'au moins une, en particulier de chaque, ouverture d'introduction, respectivement d'extraction, un connecteur pour connecter ladite ouverture avec une ouverture d'extraction, respectivement d'introduction, dudit dispositif ou d'un autre dispositif de stockage, en particulier de manière étanche.

Une telle caractéristique permet avantageusement d'augmenter le trajet parcouru par un fluide dans un même dispositif de stockage, ou dans au moins deux dispositifs de stockage connectés l'un à l'autre, pour améliorer l'échange thermique vers/depuis le fluide.

Plus particulièrement, le dispositif selon l'invention :
- un connecteur, dit d'introduction, au niveau d'au moins une ouverture d'introduction ; et
- un connecteur, dit d'extraction, au niveau d'au moins une ouverture d'extraction ;
lesdits connecteurs d'introduction et d'extraction étant complémentaires de sorte que ledit dispositif peut être assemblé, de manière modulaire, avec un autre dispositif identique, par empilement vertical ou latéral.

Ainsi, plusieurs dispositifs peuvent être connectés par empilement, sans utilisation de conduits de connexion, tout en optimisant l'espace occupé.

Au moins un, en particulier chaque, connecteur peut être réalisé en acier.

Alternativement, ou en plus, au moins un, en particulier chaque, connecteur peut être réalisé en céramique.

De plus, au moins un connecteur peut être équipé d'un joint d'étanchéité agencé autour dudit, ou dans ledit, connecteur.

Le conteneur peut être réalisé en tout matériau rigide.

Préférentiellement, le conteneur est réalisé en acier.

Le dispositif selon l'invention peut en outre comprendre une trappe d'accès à l'intérieur du conteneur, pour :
- vider l'ensemble de stockage par exemple en vue de le nettoyer ou de le remplacer ; et/ou
- remplir le conteneur avec un ensemble de stockage principal.

Une trappe d'accès peut être disposée sur une paroi inférieure du contenu de sorte que le vidage est réalisé par gravité.

Alternativement ou en plus, une trappe d'accès peut être disposée sur une paroi supérieure du conteneur de sorte que le remplissage est réalisé par gravité.

Selon un autre aspect de la même invention, il est proposé un système de stockage de chaleur/froid comprenant une pluralité de dispositifs de stockage de chaleur/froid selon l'invention, assemblés entre eux, en particulier en série.

Avantageusement, au moins deux dispositifs de stockage sont assemblés entre eux par empilement latéral ou vertical.

### Description des figures et modes de réalisation

D'autres avantages et caractéristiques apparaîtront à l'examen de la description détaillée de modes de réalisation nullement limitatifs, et des dessins annexés sur lesquels :
- les FIGURES 1-3 sont des représentations schématiques de trois exemples de réalisation d'un dispositif selon l'invention ; et
- les FIGURES 4-5 sont des représentations schématiques de deux exemples de réalisation d'un système selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite, isolées des autres caractéristiques décrites, si cette sélection de caractéristiques est suffisante pour conférer un avantage technique ou pour différencier l'invention par rapport à de l'état de la technique antérieure. Cette sélection comprend au moins une caractéristique de préférence fonctionnelle sans détails structurels, ou avec seulement une partie des détails structurels si cette partie est uniquement suffisante pour conférer un avantage technique ou pour différencier l'invention par rapport à l'état de la technique antérieure.

Sur les figures les éléments communs à plusieurs figures conservent la même référence.

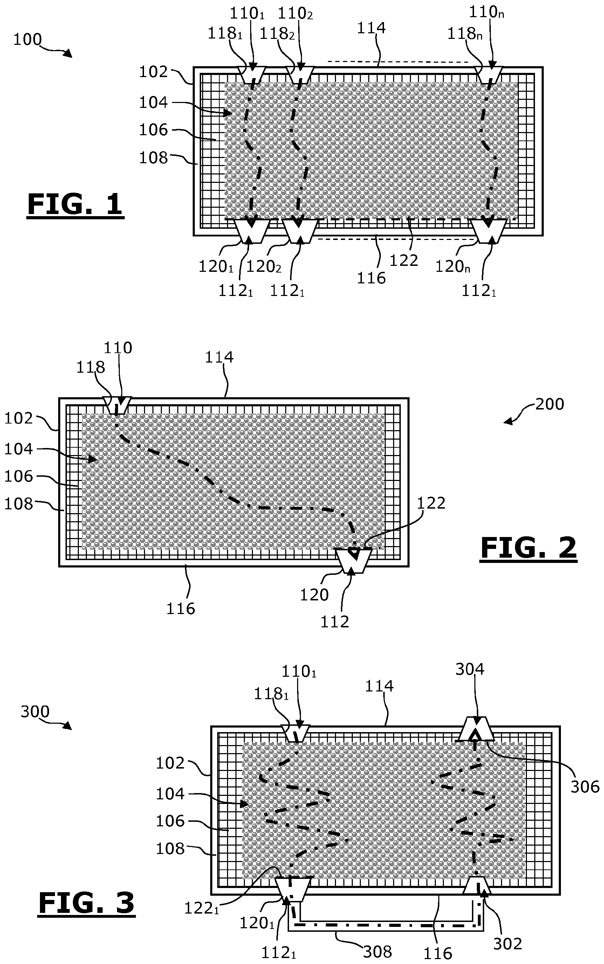

La FIGURE 1 est une représentation schématique d'un premier exemple de réalisation non limitatif d'un dispositif de stockage de chaleur, ou de froid, selon l'invention.

Le dispositif de stockage thermique 100, représenté sur la FIGURE 1, comprend un conteneur rigide 102, par exemple réaliser en acier de 5mm d'épaisseur. Dans l'exemple représenté, le conteneur présente une forme parallélépipédique. Bien entendu, le conteneur peut alternativement présenter toute autre forme, tel qu'une forme de trapèze, carré, cylindre, etc.

Le dispositif 100 comprend en outre un ensemble de stockage principal 104, disposé sensiblement au centre du conteneur 102. L'ensemble de stockage principal 104 consiste en un ensemble de billes, par exemple de diamètre 20mm, et par exemple réalisées en céramique réfractaire.

Le dispositif 100 comprend par ailleurs une couche de stockage rigide 106, disposée sensiblement autour de l'ensemble de stockage principal 104, et en tous cas entre l'ensemble de stockage principal 104 et le conteneur rigide 102. La couche de stockage rigide 106 est réalisée par assemblage de briques, par exemple de longueur 220mm et/ou de largeur 110mm et/ou de hauteur 60mm, par exemple réalisées en céramique réfractaire. La couche de stockage rigide 106 peut présenter une épaisseur constante ou variable comprise entre 60mm et 220mm. Dans l'exemple représenté, la couche de stockage rigide 106 présente une épaisseur de 110mm.

Une couche 108 d'isolant thermique est disposée entre la couche de stockage rigide et le conteneur 102. Cette couche d'isolant thermique 108 peut être réalisée en silicate de calcium, par exemple par assemblage de panneaux de silicate de calcium. Elle peut présenter une épaisseur comprise entre 100 et 300mm. Dans l'exemple représenté, la couche isolante présente une épaisseur de 200mm.

Le dispositif 100, représenté sur la FIGURE 1, comporte :
- des ouvertures 110₁-110ₙ, dite d'introduction, pour introduire un fluide dans ledit dispositif, et en particulier dans l'ensemble de stockage principal ; et
- des ouvertures 112₁-112ₙ, dite d'extraction, pour extraire un fluide ayant circulé dans ledit dispositif, et en particulier dans l'ensemble de stockage principal.

Selon un exemple de réalisation nullement limitatif, « n » peut être égal à 3, de sorte que le dispositif 100 comprend trois ouvertures d'introduction 110₁-110₃ et trois ouvertures d'extraction 110₁-112₃.

Préférentiellement, le nombre d'ouverture d'introduction est égal au nombre d'ouverture d'extraction. Bien entendu, alternativement, le nombre d'ouvertures d'introduction peut être différent du nombre d'ouverture d'extraction.

Dans l'exemple représenté toutes les ouvertures d'introduction présentent une taille et une forme identique. De même, toutes les ouvertures d'extraction présentent une taille et une forme identique. Bien entendu, au moins une ouverture d'introduction peut présenter une taille/forme identique à, ou différente de, la taille/forme d'une autre ouverture d'introduction ou d'une ouverture d'extraction.

De plus, dans le dispositif 100 de la FIGURE 1, toutes les ouvertures d'introduction 110, respectivement d'extraction 112, sont disposées sur une même face du dispositif. Bien entendu, au moins deux ouvertures d'introduction, respectivement d'extraction, peuvent être disposées sur deux différentes faces du dispositif.

Par ailleurs, dans le dispositif 100 de la FIGURE 1, les ouvertures d'introduction 110 sont aménagées sur une face 114 opposée à la face 116 sur laquelle sont aménagées les ouvertures d'extraction 112. Bien entendu, au moins une ouverture d'introduction peut être disposée sur une face qui n'est pas opposée à la face sur laquelle est aménagée une ouverture d'extraction.

Chaque ouverture d'introduction 110₁-110ₙ est équipée d'un connecteur femelle 118₁-118ₙ. Chaque ouverture d'extraction 112₁-112ₙ est équipée d'un connecteur mâle 120₁-120ₙ.

Chaque connecteur femelle 118₁-118ₙ et chaque connecteur mâle 120₁-120ₙ sont de formes et de dimensions telles qu'ils peuvent être connectés de manière étanche.

En particulier, un connecteur mâle 120 et un connecteur femelle 118, disposés en regard l'un de l'autre, sont de formes et de dimensions telles qu'ils peuvent être connectés entre eux. Ainsi, il est possible de connecter deux dispositifs 100 par empilement vertical/horizontal.

Une grille 122 peut être disposée devant les ouvertures d'extraction 112₁-112ₙ pour retenir les billes composant l'ensemble de stockage principal 102.

Le chemin parcouru par le ou les fluides au travers du dispositif de stockage de la FIGURE 1 est/sont indiqués par des flèches en pointillées.

La FIGURE 2 est une représentation schématique d'un deuxième exemple de réalisation non limitatif d'un dispositif de stockage de chaleur, ou de froid, selon l'invention.

Le dispositif 200, représenté sur la FIGURE 2, comprend toutes les caractéristiques du dispositif 100 de la FIGURE 1.

A la différence du dispositif 100 de la FIGURE 1, le dispositif 200 comporte une unique ouverture d'introduction 110 et une unique ouverture d'extraction 112 qui ne sont pas disposées en regard l'une de l'autre et décalées l'une par rapport à l'autre. Par conséquent, le dispositif 200 de la FIGURE 2 peut être parcouru uniquement par un seul fluide à la fois, alors que le dispositif 100 de la FIGURE 1 peut être parcouru par plusieurs fluides à la fois, en parallèle.

De plus, l'ouverture d'introduction 110 étant décalée par rapport à l'ouverture d'extraction 112, le dispositif 200 est plus difficilement empilable avec un dispositif identique.

La FIGURE 3 est une représentation schématique d'un troisième exemple de réalisation non limitatif d'un dispositif de stockage de chaleur, ou de froid, selon l'invention.

Le dispositif 300, représenté sur la FIGURE 3, comprend toutes les caractéristiques du dispositif 100 de la FIGURE 1.

A la différence du dispositif 100 de la FIGURE 1, le dispositif 300 comprend :
- une première ouverture d'introduction 110₁ aménagée sur la paroi 114, en regard d'une première ouverture d'extraction 112₁ aménagée sur la paroi opposée 116 ; et
- une deuxième ouverture d'introduction 302 aménagée sur la paroi 116, en regard d'une deuxième ouverture d'extraction 304 aménagée sur la paroi opposée 114.

Une première grille 122₁ de maintien des billes composant l'ensemble de stockage 104 est disposée devant la première ouverture d'extraction 112₁, et une deuxième grille 306 de maintien des billes composant l'ensemble de stockage 104 est disposée devant la deuxième ouverture d'extraction et 304.

De plus, l'ouverture d'extraction 112₁ se trouvant sur la paroi 116 est reliée à l'ouverture d'introduction 302 se trouvant également sur cette paroi, par un conduit 308, de sorte que le fluide extrait de l'ouverture d'extraction 112₁ est réintroduit dans le dispositif 300 pour la deuxième ouverture d'introduction 302 se trouvant sur cette paroi 116.

Ainsi, l'introduction et l'extraction du fluide dans le dispositif 300 est réalisée depuis une même paroi/face du dispositif 300. De plus, le chemin parcouru par le fluide dans le dispositif 300 est augmenté, et en particulier doublé.

Le dispositif 300 peut être parcouru uniquement par un seul fluide à la fois. Il peut être empilé verticalement, ou horizontalement, avec des dispositifs identiques.

Dans les exemples décrits, le fluide initial et le fluide cible entre en contact avec l'ensemble de stockage et la paroi de stockage, lors des échanges thermiques.

Alternativement, le dispositif peut comprendre un circuit interne dans lequel le fluide initial, et/ou le fluide cible, circule sans entrer en contact avec l'ensemble de stockage. Plus encore, le dispositif peut comprendre un circuit indépendant dédié à chaque fluide.

De plus, lorsque le dispositif comprend un circuit dédié à un fluide, ledit dispositif peut comprendre au moins une ouverture d'introduction, respectivement au moins une ouverture d'extraction, dédié audit fluide en communication avec le circuit dédié audit fluide.

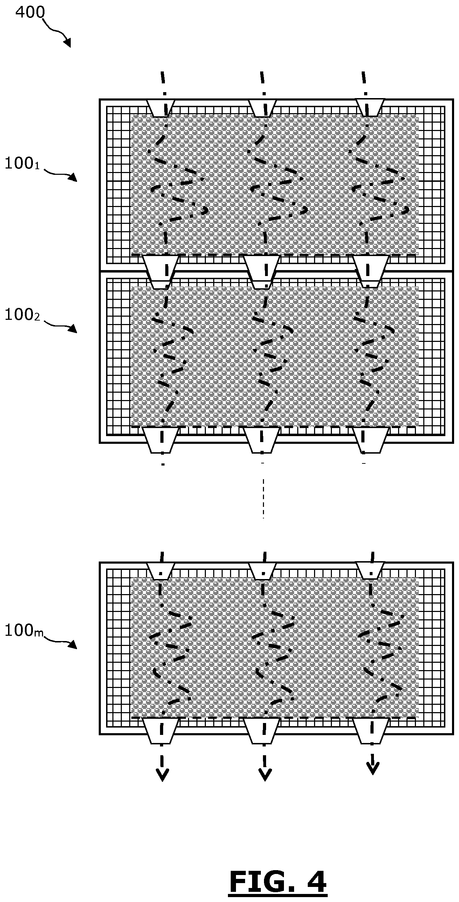

La FIGURE 4 est une représentation schématique d'un premier exemple de réalisation non limitatif d'un système de stockage de chaleur, ou de froid, selon l'invention.

Le système 400, représenté sur la FIGURE 4, comprend plusieurs dispositifs de stockage 100₁-100ₘ identiques au dispositif 100 de la FIGURE 1, empilés en série, verticalement ou horizontalement.

Le système 400 permet de faire circuler, en même temps, plusieurs fluides en série, introduits dans le système 400 au niveau du dispositif 100₁ et extraits du système 400 au niveau du dispositif 100ₘ.

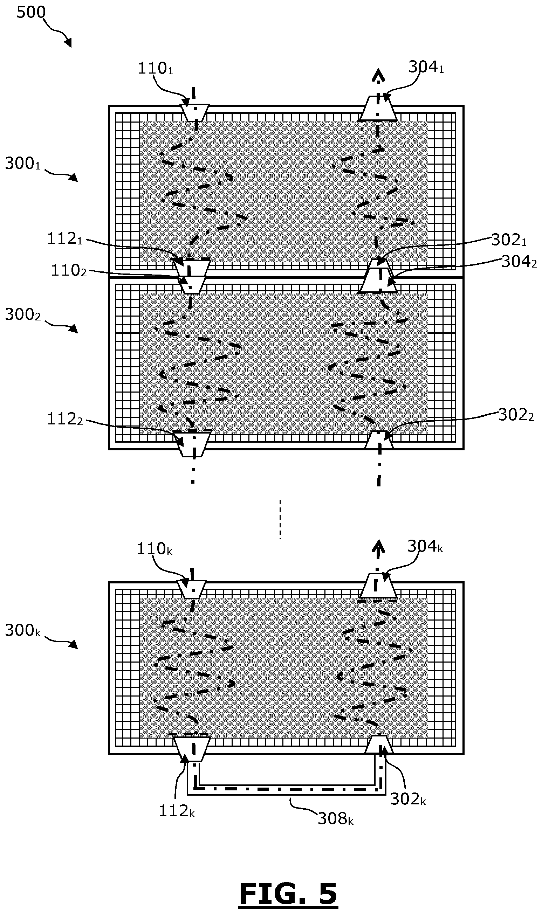

La FIGURE 5 est une représentation schématique d'un deuxième exemple de réalisation non limitatif d'un système de stockage de chaleur, ou de froid, selon l'invention.

Le système 500, représenté sur la FIGURE 5, comprend plusieurs dispositifs de stockage 300₁-300ₖ identiques au dispositif 300 de la FIGURE 3, empilés en série, verticalement ou horizontalement.

Parmi les dispositifs 300₁-300ₖ, seul le dispositif 300ₖ comprend un circuit de connexion, référencé 308ₖ sur la FIGURE 5, reliant l'ouverture d'extraction 112ₖ du dispositif 300ₖ à l'ouverture d'introduction 302ₖ du dispositif 300ₖ. Le dispositif 300₁ est connecté avec le dispositif 300₂, le dispositif 300ₖ est connecté au dispositif 300ₖ₋₁, et chaque dispositif 300ᵢ est connecté avec le dispositif 300ᵢ₋₁ d'un côté et avec le dispositif 300ᵢ₊₁ de l'autre côté, avec 2≤i≤k-1.

Le système 500 permet de faire circuler un unique fluide à la fois, introduit dans le système 500 au niveau du dispositif 300₁ et extrait du système 500 au niveau du dispositif 300₁. Le fluide parcours chaque dispositif 300 deux fois : dans un sens, puis dans l'autre.

Bien entendu, l'invention n'est pas limitée aux exemples détaillés ci-dessus.

## Revendications

1. Dispositif de stockage (100;200;300) de chaleur/froid, en vue d'une réutilisation ultérieure par transfert vers un fluide, dit cible, ledit dispositif (100;200;300) comprenant :
- un conteneur (102) ;
- un ensemble (104) de stockage, dit principal, disposé dans ledit conteneur (102), prévu pour emmagasiner des calories/frigories fournies par une source externe ;
- une couche de stockage rigide (106), prévue pour emmagasiner des calories/frigories fournies par une source externe,
- une couche isolante (108) disposée entre ledit conteneur (102) et ladite couche de stockage rigide (106) ; et
- au moins un moyen (100;200;300) pour faire circuler un fluide cible dans ledit dispositif (100;200;300), **caractérisé en ce que** la couche de stockage rigide est disposée entre ledit conteneur et ledit ensemble de stockage principal.

2. Dispositif (100;200;300) selon la revendication précédente, **caractérisé en ce que** l'ensemble de stockage principal (104) se présente sous la forme d'un ensemble d'éléments de stockage, chaque élément de stockage se présentant sous la forme d'un morceau ou d'un granule, et en particulier sous la forme d'une bille.

3. Dispositif (100;200;300) selon la revendication précédente, **caractérisé en ce que** chaque élément de stockage présente une plus grande dimension, et en particulier un diamètre, compris(e) entre 10mm et 30mm.

4. Dispositif (100;200;300) selon l'une quelconque des revendications précédentes, **caractérisé en ce que** le matériau de stockage utilisé pour la réalisation de l'ensemble de stockage (104) comprend un matériau réfractaire, et en particulier une céramique réfractaire.

5. Dispositif (100;200;300) selon l'une quelconque des revendications précédentes, **caractérisé en ce que** la couche de stockage rigide (102) est réalisée avec des briques réfractaires rigides.

6. Dispositif (100;200;300) selon l'une quelconque des revendications précédentes, **caractérisé en ce que** la couche de stockage rigide (106) présente une épaisseur comprise entre 60 et 220mm.

7. Dispositif (100;200;300) selon l'une quelconque des revendications précédentes, **caractérisé en ce que** la couche de stockage rigide (106) est réalisée en un matériau réfractaire, en particulier avec le même matériau que l'ensemble de stockage principal (104), et encore plus particulièrement en céramique réfractaire.

8. Dispositif (100;200;300) selon l'une quelconque des revendications précédentes, **caractérisé en ce que** la couche isolante (108) est réalisée en silicate de calcium.

9. Dispositif (100;200;300) selon l'une quelconque des revendications précédentes, **caractérisé en ce que** le moyen pour faire circuler, comprend :
- au moins une ouverture (110,302), dite d'introduction, pour introduire le fluide cible dans ledit dispositif (100;200;300), et
- au moins une ouverture (112,304), dite d'extraction, pour extraire ledit fluide dudit dispositif (100;200;300) ;

10. Dispositif (100;200;300) selon la revendication précédente, **caractérisé en ce que** la ou les ouverture(s) d'introduction (110,302), et la ou les ouverture(s) d'extraction (112,304) sont disposées au niveau de deux parois opposées dudit dispositif (100;200;300).

11. Dispositif (100;200;300) selon l'une quelconque des revendications 9 ou 10, **caractérisé en ce qu'**il comprend, au niveau d'au moins une ouverture d'introduction (110,302), respectivement d'extraction (112,304), un connecteur (118,120,308) pour connecter ladite ouverture (110,302) avec une ouverture d'extraction (112,304), respectivement d'introduction (110,302), dudit dispositif (100;200;300) ou d'un autre dispositif de stockage (100;200;300), en particulier de manière étanche.

12. Dispositif (100;200;300) selon l'une quelconque des revendications 9 ou 10, **caractérisé en ce qu'**il comprend :
- un connecteur (118), dit d'introduction, au niveau d'au moins une ouverture d'introduction (110,302) ; et
- un connecteur (120), dit d'extraction, au niveau d'au moins une ouverture d'extraction (112,304) ;
lesdits connecteurs (118,120) d'introduction et d'extraction étant complémentaires de sorte que ledit dispositif (100;200;300) peut être assemblé, de manière modulaire, avec un autre dispositif identique (100;200;300), par empilement vertical ou latéral.

13. Dispositif (100;200;300) selon l'une quelconque des revendications précédentes, **caractérisé en ce que** le conteneur (102) est réalisé en acier.

14. Système (400;500) de stockage de chaleur/froid comprenant une pluralité de dispositifs (100;300) de stockage de chaleur/froid selon l'une quelconque des revendications précédentes assemblés entre eux.

15. Système (400,500) selon la revendication précédente, **caractérisé en ce qu'**au moins deux dispositifs de stockage (100;300) sont assemblés entre eux par empilement latéral ou vertical.

## Patentansprüche

1. Wärme-/Kälte-Speichervorrichtung (100; 200; 300) für eine spätere Wiederverwendung durch Übertragung zu einem Ziel genannten Fluid, wobei die Vorrichtung (100; 200; 300) enthält:
- einen Behälter (102);
- eine im Behälter (102) angeordnete so genannte Hauptspeichereinheit (104), die vorgesehen ist, um von einer externen Quelle gelieferte Kalorien/Frigorien zu speichern;
- eine steife Speicherschicht (106), die vorgesehen ist, um von einer externen Quelle gelieferte Kalorien/Frigorien zu speichern;
- eine Isolierschicht (108), die zwischen dem Behälter (102) und der steifen Speicherschicht (106) angeordnet ist; und
- mindestens eine Einrichtung (100; 200; 300), um ein Zielfluid in der Vorrichtung (100; 200; 300) strömen zu lassen,
**dadurch gekennzeichnet, dass** die steife Speicherschicht zwischen dem Behälter und der Hauptspeichereinheit angeordnet ist.

2. Vorrichtung (100; 200; 300) nach dem vorhergehenden Anspruch, **dadurch gekennzeichnet, dass** die Hauptspeichereinheit (104) in Form einer Einheit von Speicherelementen vorliegt, wobei jedes Speicherelement in Form eines Stückchens oder eines Körnchens und insbesondere in Form einer Kugel vorliegt.

3. Vorrichtung (100; 200; 300) nach dem vorhergehenden Anspruch, **dadurch gekennzeichnet, dass** jedes Speicherelement eine größte Abmessung, und insbesondere einen Durchmesser, zwischen 10mm und 30mm aufweist.

4. Vorrichtung (100; 200; 300) nach einem der vorhergehenden Ansprüche, **dadurch gekennzeichnet, dass** das für die Herstellung der Speichereinheit (104) verwendete Speichermaterial ein feuerfestes Material und insbesondere eine feuerfeste Keramik enthält.

5. Vorrichtung (100; 200; 300) nach einem der vorhergehenden Ansprüche, **dadurch gekennzeichnet, dass** die steife Speicherschicht (102) mit steifen feuerfesten Ziegeln hergestellt wird.

6. Vorrichtung (100; 200; 300) nach einem der vorhergehenden Ansprüche, **dadurch gekennzeichnet, dass** die steife Speicherschicht (106) eine Dicke zwischen 60 und 220mm aufweist.

7. Vorrichtung (100; 200; 300) nach einem der vorhergehenden Ansprüche, **dadurch gekennzeichnet, dass** die steife Speicherschicht (106) aus einem feuerfesten Material hergestellt wird, insbesondere mit dem gleichen Material wie die Hauptspeichereinheit (104), und noch genauer aus feuerfester Keramik.

8. Vorrichtung (100; 200; 300) nach einem der vorhergehenden Ansprüche, **dadurch gekennzeichnet, dass** die Isolierschicht (108) aus Calciumsilicat hergestellt wird.

9. Vorrichtung (100; 200; 300) nach einem der vorhergehenden Ansprüche, **dadurch gekennzeichnet, dass** die Strömungseinrichtung enthält:
- mindestens eine so genannte Einführöffnung (110, 302) zur Einführung des Zielfluids in die Vorrichtung (100; 200; 300), und
- mindestens eine so genannte Entnahmeöffnung (112, 304) zur Entnahme des Fluids aus der Vorrichtung (100; 200; 300).

10. Vorrichtung (100; 200; 300) nach dem vorhergehenden Anspruch, **dadurch gekennzeichnet, dass** die Einführöffnung(en) (110, 302) und die Entnahmeöffnung(en) (112, 304) im Bereich von zwei gegenüberliegenden Wänden der Vorrichtung (100; 200; 300) angeordnet sind.

11. Vorrichtung (100; 200; 300) nach einem der Ansprüche 9 oder 10, **dadurch gekennzeichnet, dass** sie im Bereich mindestens einer Einführöffnung (110, 302) bzw. einer Entnahmeöffnung (112, 304) einen Verbinder (118, 120, 308) enthält, um die Öffnung (110, 302) mit einer Entnahmeöffnung (112, 304) bzw. Einführöffnung (110, 302) der Vorrichtung (100; 200; 300) oder einer anderen Speichervorrichtung (100; 200; 300) insbesondere dicht zu verbinden.

12. Vorrichtung (100; 200; 300) nach einem der Ansprüche 9 oder 10, **dadurch gekennzeichnet, dass** sie enthält:
- einen so genannten Einführverbinder (118) im Bereich mindestens einer Einführöffnung (110, 302); und
- einen so genannten Entnahmeverbinder (120) im Bereich mindestens einer Entnahmeöffnung (112, 304) ;
wobei die Einführ- und Entnahmeverbinder (118, 120) komplementär sind, so dass die Vorrichtung (100; 200; 300) durch senkrechte oder seitliche Stapelung modular mit einer anderen gleichen Vorrichtung (100; 200; 300) zusammengebaut werden kann.

13. Vorrichtung (100; 200; 300) nach einem der vorhergehenden Ansprüche, **dadurch gekennzeichnet, dass** der Behälter (102) aus Stahl hergestellt wird.

14. Wärme-/Kälte-Speichersystem (400; 500), das eine Vielzahl von zusammengebauten Wärme-/Kälte-Speichervorrichtungen (100; 300) nach einem der vorhergehenden Ansprüche enthält.

15. System (400, 500) nach dem vorhergehenden Anspruch, **dadurch gekennzeichnet, dass** mindestens zwei Speichervorrichtungen (100; 300) durch seitliche oder senkrechte Stapelung zusammengebaut werden.

## Claims

1. Device (100; 200; 300) for storing heat/cold, with a view to subsequent reuse by transfer to a fluid, referred to as target fluid, the said device (100; 200; 300) comprising:
- a container (102);
- a storage assembly (104), referred to as the main storage assembly, placed inside the said container (102) and intended to store up calories/frigories supplied by an external source;
- a rigid storage layer (106) designed to store up calories/frigories supplied by an external source;
- an insulating layer (108) placed between the said container (102) and the said rigid storage layer (106); and
- at least one means (100; 200; 300) for causing a target fluid to circulate through the said device (100; 200; 300), **characterized in that** the rigid storage layer is placed between the said container and the said main storage assembly.

2. Device (100; 200; 300) according to the preceding claim, **characterized in that** the main storage assembly (104) takes the form of an assembly of storage elements, each storage element taking the form of a piece or of a granule, and particularly, taking the form of a bead.

3. Device (100; 200; 300) according to the preceding claim, **characterized in that** each storage element has a larger dimension, and, in particular, a diameter, comprised between 10 mm and 30 mm.

4. Device (100; 200; 300) according to any one of the preceding claims, **characterized in that** the storage material used to create the storage assembly (104) comprises a refractory material and, in particular, a refractory ceramic.

5. Device (100; 200; 300) according to any one of the preceding claims, **characterized in that** the rigid storage layer (102) is produced using rigid refractory bricks.

6. Device (100; 200; 300) according to any one of the preceding claims, **characterized in that** the rigid storage layer (106) has a thickness comprised between 60 and 220 mm.

7. Device (100; 200; 300) according to any one of the preceding claims, **characterized in that** the rigid storage layer (106) is made from a refractory material, particularly from the same material as the main storage assembly (104), and, more particularly still, from refractory ceramic.

8. Device (100; 200; 300) according to any one of the preceding claims, **characterized in that** the insulating layer (108) is made of calcium silicate.

9. Device (100; 200; 300) according to any one of the preceding claims, **characterized in that** the circulating inducing means comprises:
- at least one opening (110, 302), referred to as an introduction opening, for introducing the target fluid into the said device (100; 200; 300) and
- at least one opening (112, 304), referred to as an extraction opening, for extracting the said fluid from the said device (100; 200; 300).

10. Device (100; 200; 300) according to the preceding claim, **characterized in that** the introduction opening or openings (110, 302) and the extraction opening or openings (112, 304) are positioned on two opposite walls of the said device (100; 200; 300).

11. Device (100; 200; 300) according to either one of Claims 9 and 10, **characterized in that** it comprises, at the level of at least one introduction opening (110, 302) or extraction opening (112, 304), respectively, a connector (118, 120, 308) for connecting the said opening (110, 302) with an extraction opening (112, 304) or, respectively, an introduction opening (110, 302) of the said device (100; 200; 300) or of another storage device (100; 200; 300), particularly in a fluid tight manner.

12. Device (100; 200; 300) according to either one of Claims 9 and 10, **characterized in that** it comprises:
- a connector (118), referred to as an introduction connector, at the level of at least one introduction opening (110, 302); and
- a connector (120), referred to as an extraction connector, at the level of at least one extraction opening (112; 304);
the said introduction and extraction connectors (118, 120) complementing one another so that the said device (100; 200; 300) can be assembled, in a modular manner, with another identical device (100; 200; 300), by stacking vertically or laterally.

13. Device (100; 200; 300) according to any one of the preceding claims, **characterized in that** the container (102) is made of steel.

14. System (400; 500) for storing heat/cold comprising a plurality of heat/cold storage devices (100; 300) according to any one of the preceding claims assembled with one another.

15. System (400; 500) according to the preceding claim, **characterized in that** at least two storage devices (100; 300) are assembled with one another by stacking laterally or vertically.
